(19) Europäisches Patentamt

European Patent Office

Office européen des brevets

(11) **EP 2 302 847 B1**

(12) **EUROPEAN PATENT SPECIFICATION**

(45) Date of publication and mention
of the grant of the patent:
**16.05.2012 Bulletin 2012/20**

(51) Int Cl.:
***H04L 12/56*** *(2006.01)*

(21) Application number: **09305900.4**

(22) Date of filing: **25.09.2009**

(54) **Control of traffic flows with different CoS in a communication network**

Steuerung von Verkehrsflüssen mit unterschiedlichen CoS in einem Kommunikationsnetz

Contrôle des flux de trafic avec différents CoS dans un réseau de communication

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**30.03.2011 Bulletin 2011/13**

(73) Proprietor: **Alcatel Lucent
75007 Paris (FR)**

(72) Inventors:
• **Barzaghi, Giorgio
20056 Grezzago (IT)**

• **De Blasio, Giuseppe
00135 Roma (IT)**

(74) Representative: **Shamsaei Far, Hassan et al
Alcatel-Lucent International
32, avenue Kléber
92700 Colombes (FR)**

(56) References cited:
**WO-A-2006/124414      US-A1- 2006 104 298
US-B1- 7 209 440**

**Description**

**Technical Field**

The present invention relates to the field of communication networks, in particular to control of traffic flows with different CoS (Class of Services) in a communication network.

**Background Art**

Nowadays, Ethernet is widely deployed in LANs (Local Area Networks) or MANs (Metropolitan Area Networks). Besides, due to its inherent easiness of implementation, topological flexibility and cost-effectiveness, Ethernet is currently being adopted also in carrier networks for delivering different types of services, such as best effort, voice, video, CES (Circuit Emulation Services), etc.

In particular, Circuit Emulation Services (briefly, CES) provide for delivery of TDM traffic coming from a TDM network (e.g. T1/E1 traffic coming from an SDH/SONET network) through an Ethernet network. Implementing a CES service requires connecting the TDM network to the Ethernet network by means of inter-working functions that convert the TDM traffic to Ethernet packets and vice versa. The performance requirements of CES services are generally very stringent, in particular as far as packet delay, packet delay variation (jitter) and packet loss are concerned.

It is known in the Ethernet to implement Quality of Service (briefly, QoS) mechanisms at the MAC layer of the OSI model, or at a higher layer (e.g. the network layer). The QoS mechanisms typically provide for classifying the various Ethernet packets in different Classes of Service (briefly, CoS) according to the traffic they carry, and to provide at each Ethernet node a separate queue for each CoS. The CoS of each Ethernet packet is defined by means of a 3-bits user priority field in the VLAN header of the Ethernet frame. Typically, best effort traffic is inserted in Ethernet packets with lower priority. Besides, voice, video and CES traffic is inserted in Ethernet packets having the highest priority, due to the stringent loss, delay and jitter requirements of the services they transport. QoS mechanisms provide for dropping of packets from the queues of the Ethernet nodes in case of traffic congestion and queue overflow.

Ethernet further provides for a flow control mechanism. Generally speaking, a flow control mechanism enables a downstream node to communicate an existing congestion of one or more of its input queues to an upstream node. In the Ethernet, the flow control mechanism is typically implemented by using a special type of Ethernet MAC control frame, that is termed "pause frame". In case of congestion of one of its input queues (i.e. the filling level of the queue exceeds a predefined threshold), the downstream node sends a pause frame to the upstream node, which in turn temporarily stops the transmission of all Ethernet packets directed to the downstream node. The pause frame can carry a parameter field which specifies the duration of the stop. In that case, the upstream node stops transmission for the duration specified in the pause frame. Alternatively, the downstream node can issue another pause frame when the filling level of the congested input queue decreases again underneath the predefined threshold. In that case, the upstream node resumes transmission upon reception of the other pause frame. The above described flow control mechanism does not distinguish between different CoS, and accordingly is not implemented in Ethernet carrier networks, that typically implement QoS mechanisms.

Therefore, when different CoS are present, no flow control is implemented in the Ethernet network, and the risk of congestions is minimized by over-provisioning the bandwidth of Ethernet links and Ethernet nodes.

WO 2009/046869 A1 discloses a technique for transmitting data in an Ethernet network including nodes that support differentiated queues for different Classes of Service and queue congestion handling, which involves the steps of recognizing at one node in the network that a given queue for a given Class of Service is congested, and causing the node to send to another node in the network pause frames that explicitly identify that queue for a given Class of Service as congested. The node receiving the pause frames may then control the transmission rates for different outbound queues towards the first node according to the congestion information carried by the pause frames.

US 7 209 440 discloses a method for sending a frame of data from a first channel to a second channel using at least one of m memory buffers for storing a frame, in which n have an available status and p have an unavailable status, comprising: reserving to the fist channel one or more of the n buffers having the available status when the number q of the buffers reserved to the fist channel is less than a capacity r; when a frame is received from the first channel, storing the frame in i of the q buffers and changing their status to unavailable; selectively assigning the frame to the second channel based on s of the q buffers; if the frame is assigned to the second channel, the frame is sent to the second channel from the i buffers and the status of the i buffers is changed to available; if it is not assigned to the second channel, the frame is discarded and the status of the i buffers is changed to available.

WO 2006/124414 discloses a network flow control system that utilizes flow-aware pause frames that identify a specific virtual stream to pause. Special codes may be utilized to interrupt a frame being transmitted to insert a pause frame without waiting for frame boundaries.

## Summary of the invention

The inventors have noticed that over-provisioning of bandwidth in Ethernet links and Ethernet nodes for minimizing the risk of congestions when different CoS are present is disadvantageously expensive and implies an unacceptable waste of resources.

On the other hand, dropping of packets for managing queue congestion based on CoS disadvantageously requires substantial buffering capabilities at each Ethernet node.

Besides, as mentioned above, the above described Ethernet flow control mechanism is not CoS aware. This means that, in case of congestion, the flow control mechanism stops all packets, regardless of the CoS they belong to. Therefore, disadvantageously, both low priority and high priority traffic experience delay and jitter. Typically, congestion of input queues is mainly due to bursts of low priority traffic, such as best effort, which generally has a not constant bit-rate. On the contrary, typically, higher priority traffic has a known and constant bit-rate but, due to congestions, may experience a non controllable latency, resulting in uncontrolled and excess delay and jitter.

Accordingly, the inventors have addressed the problem of providing a network node for a communication network (in particular, but not exclusively, an Ethernet communication network) capable of controlling traffic flows with different CoS, which overcomes the aforesaid drawbacks.

In particular, the inventors have addressed the problem of providing a network node for a communication network (in particular, but not exclusively, an Ethernet communication network) capable of controlling traffic flows with different CoS, which exploits the above described Ethernet flow control mechanism and, at the same time, properly handles the different QoS, allowing controlling excess delay and jitter on higher priority traffic.

According to a first aspect, the present invention provides a network node for a packet-switched communication network comprising:

- a first queue and a second queue;
- an input module configured to receive from a further network node first packets associated to a first CoS and second packets associated to a second CoS, the first CoS having QoS requirements more stringent than the second CoS, and to forward the first packets to the first queue and the second packets to the second queue; and
- a queue manager configured to detect a congestion of the second queue; the network node being characterized in that it further comprises a transmitting module configured to transmit to the further network node a pause frame specifying a stop duration for which the further network node should stop transmitting the first packets and the second packets, wherein the stop duration is lower than or equal to a maximum allowable delay variation on the first packets.

Preferably, the queue manager is configured to detect the congestion of the second queue by comparing a filling level of the second queue with a filling threshold.

Preferably, the transmitting module is further configured to periodically re-transmit the pause frame with a re-transmission period.

Preferably, the re-transmission period is such that an effective transmission bit-rate at which the first packets and second packets are received at the network node is lower than or equal to a bit-rate available downstream of the network node.

Preferably, the re-transmission period is calculated as follows:

$$PFP = \frac{CR * SD}{CR - RR},$$

wherein SD is the stop duration, CR is a maximum transmission rate at which the first packets and second packets are received at the network node and RR is the bit-rate available downstream of the network node.

Preferably, the re-transmission period is such that the effective transmission bit-rate is higher than or equal to a constant bit-rate of the first packets.

According to a second aspect, the present invention provides a packet-switched communication network comprising a network node as set forth above.

According to a third aspect, the present invention provides a method for controlling traffic flows with different CoS in a communication network, the traffic flows comprising first packets associated to a first CoS and second packets associated to a second CoS, the first CoS having QoS requirements more stringent than the second CoS, the method comprising, at a network node:

a) providing a first queue and a second queue;

b) receiving the first packets and the second packets from a further network node, storing the first packets in the first queue and storing the second packets in the second queue;

c) detecting a congestion of the second queue;

the method being characterized in that it further comprises, at the network node,

d) transmitting to the further network node a pause frame specifying a stop duration for which the further network node should stop transmitting the first packets and the second packets,

wherein step d) comprises setting the stop duration to a value lower than or equal to a maximum allowable delay variation on the first packets.

Preferably, step c) comprises detecting the congestion of the second queue by comparing a filling level of the second queue with a filling threshold.

Preferably, step d) is periodically repeated with a re-transmission period.

Preferably, step d) comprises setting the re-transmission period so that an effective transmission bit-rate at which the first packets and second packets are received at the network node is lower than or equal to a bit-rate available downstream of the network node.

Preferably, step d) comprises calculating the re-transmission period as follows:

$$PFP = \frac{CR * SD}{CR - RR},$$

wherein SD is the stop duration, CR is a maximum transmission rate at which the first packets and second packets are received at the network node and RR is the bit-rate available downstream of the network node.

Preferably, step d) comprises setting the re-transmission period so that the effective transmission bit-rate is higher than or equal to a constant bit-rate of the first packets.

According to a fourth aspect, the present invention provides a computer program product comprising computer-executable instructions for performing, when the program is run on a computer of a network node for a communication network, a method for controlling traffic flows with different CoS in a communication network, the traffic flows comprising first packets associated to a first CoS and second packets associated to a second CoS, the first CoS having QoS requirements more stringent than the second CoS, the method comprising:

- when the first packets and the second packets are received at the network node from a further network node, storing the first packets in a first queue and storing the second packets in a second queue;
- detecting a congestion of the second queue;
- generating a pause frame specifying a stop duration for which the further network node should stop transmitting the first packets and the second packets,

wherein the step of generating comprises setting the stop duration to a value lower than or equal to a maximum allowable delay variation on the first packets.

According to a fifth aspect, the present invention provides a digital data storage medium storing a computer program product as set forth above.

## Brief description of the drawings

Embodiments of the invention will be better understood by reading the following detailed description, given by way of example and not of limitation, to be read with reference to the accompanying drawings, wherein:

- Figures 1a and 1b schematically show a portion of a communication network according to an embodiment of the present invention;
- Figure 2 shows an exemplary flow chart illustrating the steps of the method as a function of time according to an embodiment of the present invention; and
- Figure 3 shows an exemplary time diagram of the number of transmitted bits in the communication network of Figures 1 a and 1 b when the method of Figure 2 is implemented.

**Detailed description of preferred embodiments of the invention**

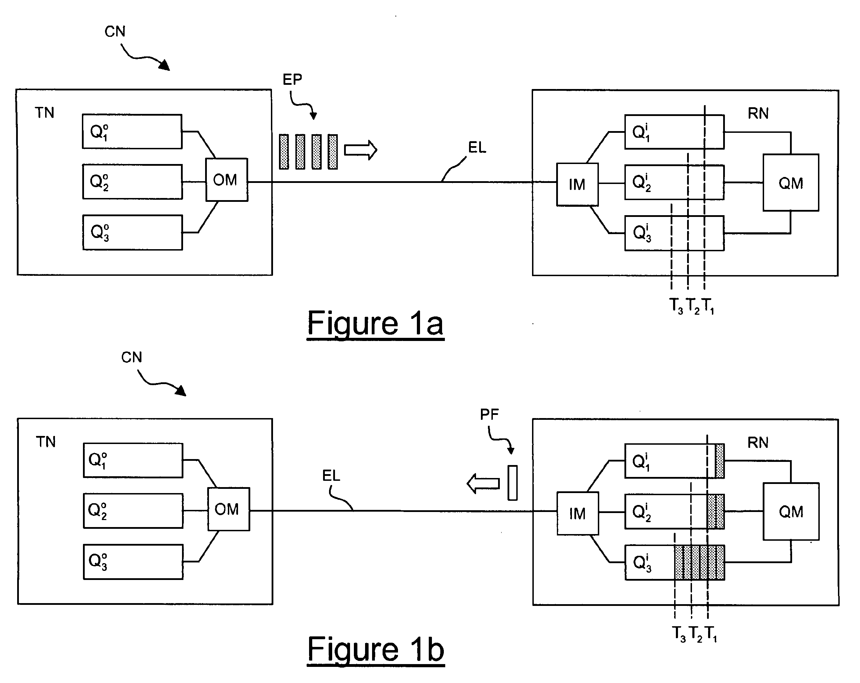

Figures 1a and 1b schematically show a portion of a communication network CN suitable for implementing a method for controlling traffic flows according to an embodiment of the present invention. Preferably, the communication network CN is a packet-switched communication network, more preferably an Ethernet communication network.

The portion of communication network CN shown in Figure 1a comprises a transmitting node TN, a receiving node RN and a link EL connecting the transmitting node TN and the receiving node RN. The communication network CN may comprise other nodes and links that are not shown in Figures 1a and 1 b, since they are not relevant to the present description.

Preferably, the link EL is a packet-switched link, more preferably an Ethernet link. Although in the following description the nodes TN and RN are termed "transmitting" and "receiving" respectively, the link EL is preferably a bidirectional link, i.e. both the transmitting node TN and the receiving node RN have a transmitting side and a receiving side. However, for sake of clarity of the following description, only the transmitting side of TN and the receiving side of RN are considered.

The link EL is suitable for carrying packets EP distributed in a number of traffic flows transmitted from the transmitting node TN to the receiving node RN. The packets EP are preferably Ethernet packets. Each traffic flow (and therefore each packet EP belonging thereto) is preferably associated to a Class of Service (CoS). Preferably, a number N of CoS is defined. For instance, N may be equal to three, the three CoS being Best Effort, Guaranteed Bandwidth and Fixed Bandwidth.

Packets EP are preferably marked with a priority corresponding to the associated CoS. For instance, packets associated to the Best Effort CoS are marked with a low priority, packets associated to the Guaranteed Bandwidth CoS are marked with a medium priority and packets associated to the Fixed Bandwidth CoS are marked with a high priority.

According to a preferred embodiment of the invention, the transmitting node TN comprises a number N of output queues $Q^o_n$ (n=1, 2, ..., N) and an output module OM.

The output queues $Q^o_n$ are suitable for buffering the packets EP that have to be transmitted from the transmitting node TN to the receiving node RN. Preferably, each output queue $Q^o_n$ is configured to buffer packets EP associated to a respective CoS. Since, as mentioned above, it has been assumed that N is equal to three, the transmitting node TN comprises three output queues $Q^o_1$, $Q^o_2$ and $Q^o_3$, each corresponding to a respective CoS. For instance, the output queue $Q^o_1$ may be associated to the Fixed Bandwidth CoS, the output queue $Q^o_2$ may be associated to the Guaranteed Bandwidth CoS and the output queue $Q^o_3$ may be associated to the Best Effort CoS. This is merely exemplary, since the transmitting node TN can comprise any number of output queues, according to the number N of defined CoS.

Preferably, the output module OM is suitable for scheduling the transmission of the packets EP over the link EL.

According to a preferred embodiment of the present invention, the receiving node RN comprises an input module IM, a number of input queues $Q^i_n$ (n=1,2, ..., N) and a queue manager QM.

Preferably, the input module IM is configured to receive packets EP from the transmitting node TN and, for each packet, to identify the associated CoS. On the basis of the identified CoS, the input module IM is configured for forwarding each packet to a respective input queue $Q^i_n$.

The input queues $Q^i_n$ are preferably suitable for buffering the packets EP received at the receiving node RN from the transmitting node TN. Preferably, each input queue $Q^i_n$ is configured to buffer packets associated to a respective CoS. Since, as mentioned above, it has been assumed that N is equal to three, the receiving node RN comprises three input queues $Q^i_1$, $Q^i_2$ and $Q^i_3$, each corresponding to a respective CoS. For instance, the input queue $Q^i_1$ may be associated to the Fixed Bandwidth CoS, the input queue $Q^i_2$ may be associated to the Guaranteed Bandwidth CoS and the input queue $Q^i_3$ may be associated to the Best Effort CoS. Obviously, this is merely exemplary, since the receiving node RN can comprise any number of input queues, according to the number N of defined CoS.

Preferably, a filling threshold $T_n$ (n=1,2, ..., N) is associated to each input queue $Q^i_n$. Each filling threshold $T_n$ identifies the input queue filling level above which the input queue $Q^i_n$ is considered to be "congested". Preferably, different filling thresholds $T_n$ are associated to different input queues $Q^i_n$. Preferably, the filling thresholds $T_n$ of the input queues $Q^i_n$ are chosen on the basis of the requirements (i.e. delay and jitter) of the associated CoS. More preferably, the filling threshold $T_n$ increases as the CoS associated to the input queue $Q^i_n$ decreases (i.e. its requirements become less stringent).

The queue manager QM is preferably configured for monitoring the filling level of each input queue $Q^i_n$, for comparing it with the respective filling threshold $T_n$, and for detecting possible congestions of the input queue $Q^i_n$ when the filling level exceeds the filling threshold $T_n$.

In Figure 1a, where the receiving node RN comprises three input queues $Q^i_1$, $Q^i_2$ and $Q^i_3$, the respective filling thresholds $T_1$, $T_2$ and $T_3$ are schematically indicated. The input queue $Q^i_1$, being associated to the Fixed Bandwidth CoS, has the lowest filling threshold $T_1$, whereas the input queue $Q^i_3$, being associated to the Best Effort CoS, has the highest filling threshold $T_3$. Indeed, the traffic flows associated to the Best Effort CoS do not have a constant bandwidth, and accordingly the packets EP included in such traffic flows may be grouped in "packet bursts" that may induce fast and non-predictable filling of the input queue $Q^i_3$.

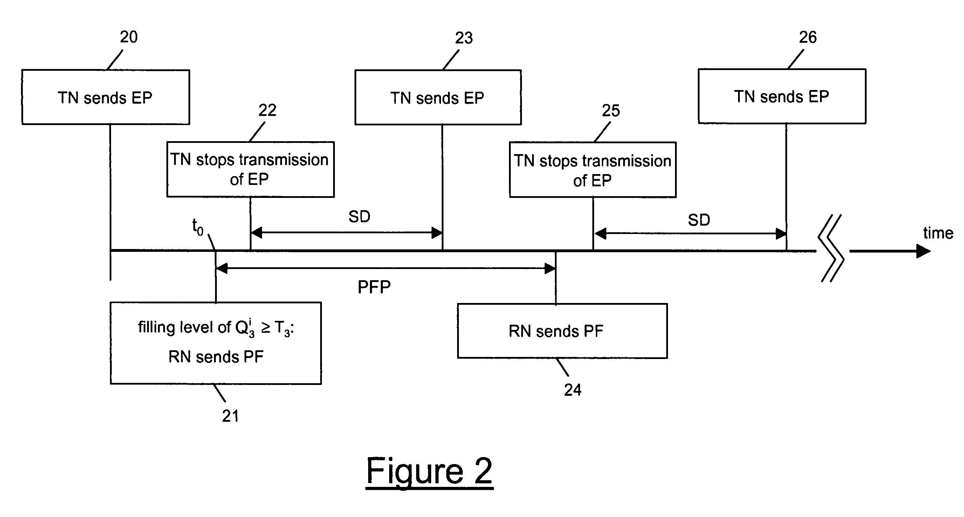

The method according to a preferred embodiment of the present invention will be now described in detail, referring also to the flow chart of Figure 2.

In the operative situation shown in Figure 1a, the transmitting node TN is transmitting packets EP to the receiving node RN through the link EL (step 20).

It is assumed that, at time to, the queue manager QM detects that one of the input queues $Q^i_n$ becomes congested (step 21). In particular, it is assumed that the filling level of input queue $Q^i_3$, corresponding to the Best Effort CoS, exceeds the filling threshold $T_3$ and thus the input queue $Q^i_3$ is congested. This is merely exemplary, since congestion can occur to each of the input queues $Q^i_1$, $Q^i_2$ and $Q^i_3$.

According to a preferred embodiment of the invention, at time to (i.e. upon detection by the queue manager QM that the input queue $Q^i_3$ is congested), the receiving node RN issues a pause frame PF and sends it (by means of a transmitting module not shown in Figures 1a and 1b) to the transmitting node TN. Preferably, the pause frame PF is an Ethernet pause frame containing a parameter field that specifies a stop duration SD.

The transmitting node TN preferably receives the pause frame PF by means of a receiving module (not shown in Figures 1a and 1b). After a delay, due to the propagation of the pause frame PF along the link EL and the processing of the pause frame PF at the transmitting node TN, the transmitting node TN preferably stops the transmission of all packets EP directed to the receiving node RN (step 22). Preferably, the transmission is stopped for a time interval having a duration equal to the stop duration SD specified in the received pause frame PF. After the stop duration SD is elapsed, the transmitting node TN preferably restarts the transmission of all packets EP directed to the receiving node RN.

Preferably, the stop duration SD is set lower than or equal to a maximum allowable delay variation on the packets EP associated to the CoS with more stringent QoS requirements (i.e. Fixed Bandwidth, in the above example). Preferably, the maximum allowable delay variation on the packets EP belonging to the traffic flow associated to the CoS with more stringent QoS requirements is related to the QoS requirements (i.e. delay and jitter) of the traffic flow. In particular, for CES traffic flows, the maximum allowable delay variation is chosen so that it can be absorbed by the buffering capability of the inter-working functions interposed between the TDM network from which the TDM traffic to be transported according to the CES service comes and the communication network CN (in particular, the transmitting node TN) of Figures 1a and 1b. For example, a typical value of the maximum allowable delay variation for CES traffic flows is equal to about 1 ms.

Advantageously, selecting a stop duration SD lower than or equal to a maximum allowable delay variation on the packets EP associated to the CoS with more stringent QoS requirements allows controlling the delay variation induced by the pause frame mechanism on the traffic flows with CoS with more stringent QoS requirements.

According to a preferred embodiment of the present invention, the pause frame PF specifying the stop duration SD is sent at time to (as described above) and successively, it is periodically re-transmitted by the receiving node RN to the transmitting node TN. In Figure 2, the re-transmission period between two consecutive transmissions of the pause frame PF by the receiving node RN is referred to as PFP. The re-transmission period PFP is preferably longer than the stop duration SD.

Therefore, in each re-transmission period PFP the transmitting node TN stops transmission of all packets EP for a stop duration SD. For simplicity, a single re-transmission is shown in Figure 2 and is indicated as step 24. Similarly, the step of stopping transmission at reception of a pause frame PF following the first re-transmission step 24 is indicated in Figure 2 as step 25, while the step of restarting transmission after a stop duration SD is elapsed is indicated in Figure 2 as step 26. Steps 24, 25 and 26 are periodically repeated in each re-transmission period PFP. For simplicity, such repetitions are not shown in Figure 2.

Preferably, the re-transmission period PFP depends on the stop duration SD and on the difference between the transmission bit-rate CR (expressed e.g. in Mb/s) of the link EL and the bit-rate RR (expressed e.g. in Mb/s) available downstream of the receiving node RN.

In particular, the re-transmission period PFP is computed so as to provide, on the link EL, an effective transmission bit-rate lower than or equal to the bit-rate RR available downstream of the receiving node RN. Besides, according to a preferred embodiment of the present invention, the re-transmission period PFP is computed so as to provide, on the link EL, an effective transmission bit-rate higher than or equal to the constant bit-rate associated to the CoS with more stringent QoS requirements, i.e. the Fixed Bandwidth CoS. This advantageously allows avoiding congestion of the input queues at the receiving node RN, while at the same time it guarantees that the traffic flows associated to the Fixed Bandwidth CoS are properly delivered.

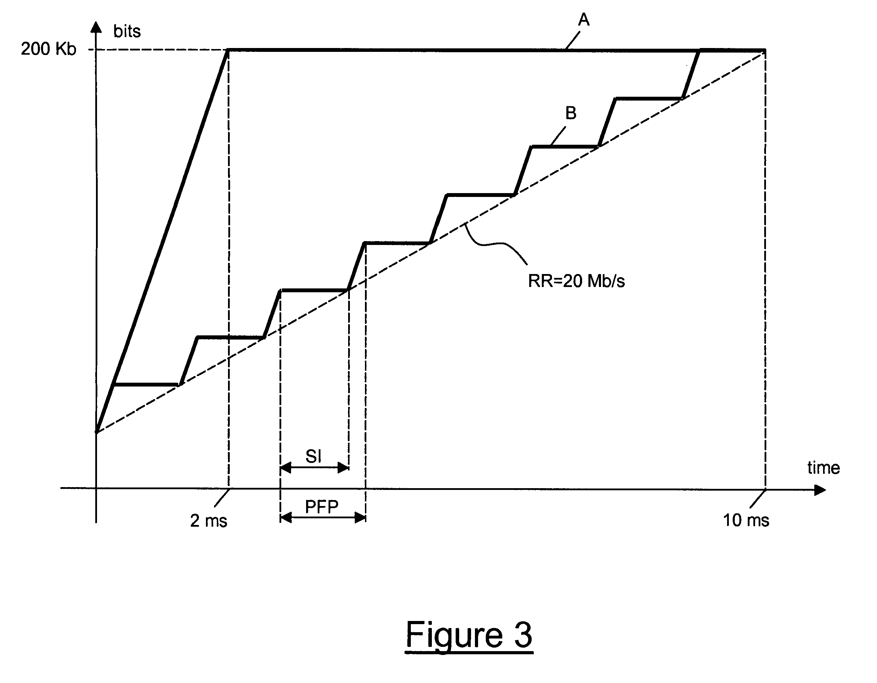

With reference to Figure 3, the computation of the re-transmission period PFP is described in further detail, by considering an exemplary case.

In particular, it is assumed that a CES traffic flow is transmitted on the link EL from the transmitting node TN to the receiving node RN. The CES traffic flow is associated to the Fixed Bandwidth CoS. The maximum allowable delay variation on the packets EP belonging to the CES traffic flow is assumed to be equal to 1 ms. Besides, it is assumed that the transmission bit-rate CR of the link EL is equal to 100 Mb/s, and the bit-rate RR available downstream of the receiving node RN is equal to 20 Mb/s.

In Figure 3, the operation of the transmitting node TN for a fixed time window TW has been taken into consideration. The time window TW is equal to 10 ms.

As shown in Figure 3, the maximum number of bits that, in a time window TW of 10 ms, can be processed by the receiving node RN is equal to RR*TW=20 Mb/s*10 ms=200 Kb. On the other hand, since the transmission bit-rate CR of the link EL is equal to 100 Mb/s, in a time window TW of 10 ms the link EL can carry CR*TW=100 Mb/s*10 ms=1 Mb of traffic.

As mentioned above, for avoiding congestions of the input queues at the receiving node RN and for guaranteeing proper delivery of the traffic flows associated to the CoS with more stringent QoS requirements, the effective transmission bit-rate of the link EL should be set (by suitably tailoring the re-transmission period PFP) to a value lower than or equal to the bit-rate RR, and higher than or equal to the constant bit-rate of the Fixed Bandwidth traffic flow. In this example, it is assumed that the re-transmission period PFP is set in order to provide an effective transmission bit-rate equal to the bit-rate RR available downstream of the receiving node RN. To this purpose, the total number of bits to be stopped in the time window TW of 10 ms is (CR-RR)*TW=(100 Mb/s-20 Mb/s)/10 ms=800 Kb.

Since, as described above, each stop period preferably has a stop duration SD equal to or lower than the maximum allowable delay variation on the packets EP associated to the CoS with more stringent QoS requirements (i.e. 1 ms for packets of the CES traffic flows, in this example), the 800 Kb should be stopped using stop periods with a stop duration SD lower than or equal to 1 ms each.

According to the example considered in Figure 3, it is assumed that the stop duration SD is equal to 1 ms. Therefore, in each stop period, CR*SD=100 Mbit/s*1 ms=100 Kb are stopped. In order to stop 800 Kb in a time window TW of 10 ms, the transmitting node TN should therefore receive eight pause frames PF inside the time window TW of 10 ms.

Since, as mentioned above, the pause frames PF are periodically transmitted with a re-transmission period PFP, according to the example considered in Figure 3, the re-transmission period PFP is thus equal to:

$$PFP = TW/8 = 10 \text{ ms}/8 = 1,25 \text{ ms}.$$

Therefore, in each time window TW of 10 ms, transmission of the packets EP is periodically stopped and restarted, with a period of 1,25 ms. Every 1,25 ms, the transmitting node TN transmits packets EP at a maximum rate of CR=100 Mbit/s for 0,25 ms, while it stops transmission for 1 ms, as indicated by the curve B of Figure 3.

More generally, therefore, if (CR-RR)*TW is the number of bits that should be stopped in a time window TW and CR*SD is the number of bits stopped during a stop period having stop duration SD, the number of stop periods that should be provided in a time window TW is:

$$\frac{(CR-RR)*TW}{CR*SD} \qquad\qquad [1]$$

The re-transmission period PFP is therefore equal to:

$$PFP = \frac{TW}{\dfrac{(CR-RR)*TW}{CR*SD}} = \frac{CR*SD}{CR-RR} \qquad\qquad [2]$$

In this way, advantageously, the effective transmission bit-rate on the link EL is lowered from the transmission rate CR to the bit-rate RR available downstream of the receiving node RN (thereby preventing congestion of the input queues at the receiving node RN) while, at the same time, the maximum delay variation experienced by all the packets EP (and, therefore, also by the packets of the CES traffic flow) is equal to the maximum delay variation of 1 ms.

It can be noticed that stopping 800 Kb in each time window TW of 10 ms may be achieved for instance by operating the transmitting node TN so that, in each time window TW of 10 ms, it transmits packets EP for 2 ms and then it stops transmission for 8 ms, as indicated by the curve A of Figure 3. This means that packets buffered in the output queues $Q^i_1$, $Q^i_2$ and $Q^i_3$ at the transmitting node TN may undergo a latency equal to 8 ms. This value is however much higher than 1 ms, i.e. the maximum allowable delay variation on the packets EP belonging to the CES traffic flow.

Therefore, periodically sending pause frames PF to the transmitting node TN in order to periodically stop transmission as disclosed above advantageously prevents congestion of the input queues $Q^i_n$ at the receiving node RN, or at least of the input queue associated to the CoS with more stringent QoS requirements. This is achieved by suitably setting the stop duration SD and the re-transmission period PFP so that the transmission bit-rate CR of the link EL matches the bit-rate RR available downstream of the receiving node RN, or at least the bit-rate associated to the services with highest CoS. In this way, advantageously, the transmission of the services with highest CoS (e.g. Fixed Bandwidth) is guaranteed without loss of packets.

On the other hand, the QoS requirements of the related services (e.g. the CES services) in terms of delay and delay variation are fulfilled, by setting the stop duration SD to a value lower than or equal to the maximum delay variation that packets transporting CES services may undergo. This advantageously allows to control the delay and jitter of the delivered services and thus, in other words, to properly handle the QoS of the services themselves.

Moreover, advantageously, the output queues $Q^o_n$ of the transmitting node TN are periodically emptied and thus, differently from the congestion management mechanisms, no substantial buffering capabilities are required at the transmitting node TN.

**Claims**

1.   A network node (RN) for a packet-switched communication network (CN) comprising:

- a first queue ($Q^i_1$) and a second queue ($Q^i_3$);
- an input module (IM) configured to receive from a further network node (TN) first packets associated to a first CoS and second packets associated to a second CoS, said first CoS having QoS requirements more stringent than said second CoS, and to forward said first packets to said first queue ($Q^i_1$) and said second packets to said second queue ($Q^i_3$); and
- a queue manager (QM) configured to detect a congestion of said second queue ($Q^i_3$);

said network node (RN) being **characterized in that** it further comprises a transmitting module configured to transmit to said further network node (TN) a pause frame (PF) specifying a stop duration (SD) for which said further network node (TN) should stop transmitting said first packets and said second packets, wherein said stop duration (SD) is lower than or equal to a maximum allowable delay variation on said first packets.

2.   The network node (RN) according to claim 1, wherein said queue manager (QM) is configured to detect said congestion of said second queue ($Q^i_3$) by comparing a filling level of said second queue ($Q^i_3$) with a filling threshold ($T_3$).

3.   The network node (RN) according to claim 1 or 2, wherein said transmitting module is further configured to periodically re-transmit said pause frame (PF) with a re-transmission period (PFP).

4.   The network node (RN) according to claim 3, wherein said re-transmission period (PFP) is such that an effective transmission bit-rate at which said first packets and second packets are received at said network node (RN) is lower than or equal to a bit-rate (RR) available downstream of said network node (RN).

5.   The network node (RN) according to claim 4, wherein said re-transmission period (PFP) is calculated as follows:

$$PFP = \frac{CR * SD}{CR - RR},$$

wherein SD is said stop duration (SD), CR is a maximum transmission rate at which said first packets and second packets are received at said network node (RN) and RR is said bit-rate (RR) available downstream of said network node (RN).

6.   The network node (RN) according to claim 4 or 5, wherein said re-transmission period (PFP) is such that said effective transmission bit-rate is higher than or equal to a constant bit-rate of said first packets.

7.   A packet-switched communication network (CN) comprising a network node (RN) according to any of claims 1 to 6.

8.   A method for controlling traffic flows with different CoS in a communication network (CN), said traffic flows comprising first packets associated to a first CoS and second packets associated to a second CoS, said first CoS having QoS requirements more stringent than said second CoS, said method comprising, at a network node (RN):

> a) providing a first queue ($Q^i_1$) and a second queue ($Q^i_3$);
> b) receiving said first packets and said second packets from a further network node (TN), storing said first packets in said first queue ($Q^i_1$) and storing said second packets in said second queue ($Q^i_3$);
> c) detecting a congestion of said second queue ($Q^i_3$);
> said method being **characterized in that** it further comprises, at said network node (RN),
> d) transmitting to said further network node (TN) a pause frame (PF) specifying a stop duration (SD) for which said further network node (TN) should stop transmitting said first packets and said second packets,
> wherein said step d) comprises setting said stop duration (SD) to a value lower than or equal to a maximum allowable delay variation on said first packets.

9. The method according to claim 8, wherein said step c) comprises detecting said congestion of said second queue ($Q^i_3$) by comparing a filling level of said second queue ($Q^i_3$) with a filling threshold ($T_3$).

10. The method according to claim 8 or 9, wherein said step d) is periodically repeated with a re-transmission period (PFP).

11. The method according to claim 10, wherein said step d) comprises setting said re-transmission period (PFP) so that an effective transmission bit-rate at which said first packets and second packets are received at said network node (RN) is lower than or equal to a bit-rate (RR) available downstream of said network node (RN).

12. The method according to claim 11, wherein said step d) comprises calculating said re-transmission period (PFP) as follows:

$$PFP = \frac{CR * SD}{CR - RR},$$

wherein SD is said stop duration (SD), CR is a maximum transmission rate at which said first packets and second packets are received at said network node (RN) and RR is said bit-rate (RR) available downstream of said network node (RN).

13. The method according to claim 11 or 12, wherein said step d) comprises setting said re-transmission period (PFP) so that said effective transmission bit-rate is higher than or equal to a constant bit-rate of said first packets.

14. A computer program product comprising computer-executable instructions for performing, when the program is run on a computer of a network node (RN) for a communication network (CN), a method for controlling traffic flows with different CoS in a communication network (CN), said traffic flows comprising first packets associated to a first CoS and second packets associated to a second CoS, said first CoS having QoS requirements more stringent than said second CoS, said method comprising:

> - when said first packets and said second packets are received at said network node (RN) from a further network node (TN), storing said first packets in a first queue ($Q^i_1$) and storing said second packets in a second queue ($Q^i_3$);
> - detecting a congestion of said second queue ($Q^i_3$);

said computer program product being **characterized in that** said method further comprises

> - generating a pause frame (PF) specifying a stop duration (SD) for which said further network node (TN) should stop transmitting said first packets and said second packets,

wherein said step of generating comprises setting said stop duration (SD) to a value lower than or equal to a maximum allowable delay variation on said first packets.

15. A digital data storage medium storing a computer program product according to claim 14.

**Patentansprüche**

1. Netzwerkknoten (RN) für ein paketvermitteltes Kommunikationsnetzwerk (CN), umfassend:

   - Eine erste Warteschlange ($Q^i1$) und eine zweite Warteschlange ($Q^i3$);
   - ein Eingangsmodul (IM), konfiguriert für den Empfang von ersten Paketen, die einer ersten CoS zugeordnet sind, und zweiten Paketen, die einer zweiten CoS zugeordnet sind, von einem weiteren Netzwerkknoten (TN), wobei die besagte erste CoS strengere QoS-Anforderungen aufweist als die besagte zweite CoS, und für das Weiterleiten der besagten ersten Pakete an die besagte erste Warteschlange ($Q^i1$) und der besagten zweiten Pakete an die besagte zweite Warteschlange ($Q^i3$); und
   - einen Warteschlangenverwalter (QM), konfiguriert für das Erkennen einer Überlast in der besagten zweiten Warteschlange ($Q^i3$);

   wobei der besagte Netzwerkknoten (RN) **dadurch gekennzeichnet ist, dass** er weiterhin ein Sendemodul umfasst, welches dafür konfiguriert ist, an den besagten weiteren Netzwerkknoten (TN) einen Pause-Rahmen (PF) zu übertragen, welcher eine Unterbrechungsdauer (SD) spezifiziert, während welcher der besagte weitere Netzwerkknoten (TN) die Übertragung der besagten ersten Pakete und der besagten zweiten Pakete unterbrechen soll, wobei die besagte Unterbrechungsdauer (SD) niedriger als eine für die besagten ersten Pakete maximal zulässige Verzögerungsvariation oder gleich dieser ist.

2. Netzwerkknoten (RN) nach Anspruch 1, wobei der besagte Warteschlangenverwalter (QM) dafür konfiguriert ist, die besagte Überlast in der besagten zweiten Warteschlange ($Q^i3$) durch Vergleichen eines Füllstands der besagten zweiten Warteschlange ($Q^i3$) mit einem Füllgrenzwert ($T_3$) zu erkennen.

3. Netzwerkknoten (RN) nach Anspruch 1 oder 2, wobei das besagte Sendemodul für das periodische Neuübertragen des besagten Pause-Rahmens (PF) mit einer Neuübertragungsperiode (PFP) konfiguriert ist.

4. Netzwerkknoten (RN) nach Anspruch 3, wobei die besagte Neuübertragungsperiode (PFP) derart festgelegt ist, dass eine effektive Übertragungs-Bitrate, mit welcher die besagten ersten Pakete und die besagten zweiten Pakete an dem besagten Netzwerkknoten (RN) empfangen werden, niedriger als die stromabwärts des besagten Netzwerkknotens (RN) verfügbare Bitrate (RR) oder gleich dieser ist.

5. Netzwerkknoten (RN) nach Anspruch 4, wobei die besagte Neuübertragungsperiode (PFP) wie folgt berechnet wird:

$$PFP = \frac{CR * SD}{CR - RR},$$

   wobei SD die besagte Unterbrechungsdauer (SD) darstellt, CR eine maximale Übertragungsrate ist, mit welcher die besagten ersten Pakete und die besagten zweiten Pakete an dem besagten Netzwerkknoten (RN) empfangen werden, und RR die besagte stromabwärts des besagten Netzwerkknotens (RN) verfügbare Bitrate (RR) ist.

6. Netzwerkknoten (RN) nach Anspruch 4 oder 5, wobei die besagte Neuübertragungsperiode (PFP) derart festgelegt ist, dass die besagte effektive Übertragungs-Bitrate höher als eine konstante Bitrate der besagten ersten Pakete oder gleich dieser ist.

7. Paketvermitteltes Kommunikationsnetzwerk (CN) mit einem Netzwerkknoten (RN) gemäß einem beliebigen der Ansprüche 1 bis 6.

8. Verfahren zum Regeln der Verkehrsflüsse mit unterschiedlichen CoS in einem Kommunikationsnetzwerk (CN), wobei die besagten Verkehrsflüsse erste Pakete, die einer ersten CoS zugeordnet sind, und zweite Pakete, die einer zweiten CoS zugeordnet sind, umfassen, wobei die besagte erste CoS strengere QoS-Anforderungen aufweist als die besagte zweite CoS, wobei das besagte Verfahren an einem Netzwerkknoten (RN) umfasst:

   a) Bereitstellen einer ersten Warteschlange ($Q^i1$) und einer zweiten Warteschlange ($Q^i3$);
   b) Empfangen der besagten ersten Pakete und der besagten zweiten Pakete von einem weiteren Netzwerkknoten (TN), Speichern der besagten ersten Pakete in der besagten ersten Warteschlange ($Q^i1$), und Speichern

der besagten zweiten Pakete in der besagten zweiten Warteschlange ($Q^i3$);

c) Erkennen einer Überlast in der besagten zweiten Warteschlange ($Q^i3$);

wobei das besagte Verfahren **dadurch gekennzeichnet ist, dass** es weiterhin an dem besagten Netzwerkknoten (RN) umfasst:

d) Übertragen, an den besagten weiteren Netzwerkknoten (TN), eines Pause-Rahmens (PF), welcher eine Unterbrechungsdauer (SD) spezifiziert, während welcher der besagte weitere Netzwerkknoten (TN) die Übertragung der besagten ersten Pakete und der besagten zweiten Pakete unterbrechen soll,

wobei der besagte Schritt d) das Einstellen der besagten Unterbrechungsdauer (SD) auf einen Wert, der niedriger als eine für die besagten ersten Pakete maximal zulässige Verzögerungsvariation oder gleich dieser ist, umfasst.

9. Verfahren nach Anspruch 8, wobei der besagte Schritt c) das Erkennen der besagten Überlast in der zweiten Warteschlange ($Q^i3$) durch Vergleichen eines Füllstands der besagten zweiten Warteschlange ($Q^i3$) mit einem Füllgrenzwert ($T_3$) umfasst.

10. Verfahren nach Anspruch 8 oder 9, wobei der besagte Schritt d) periodisch mit einer Neuübertragungsperiode (PFP) wiederholt wird.

11. Verfahren nach Anspruch 10, wobei der besagte Schritt d) das derartige Einstellen der besagten Neuübertragungsperiode (PFP) umfasst, dass eine effektive Übertragungs-Bitrate, mit welcher die besagten ersten Pakete und die besagten zweiten Pakete an dem besagten Netzwerkknoten (RN) empfangen werden, niedriger als eine stromabwärts des besagten Netzwerkknotens (RN) verfügbare Bitrate (RR) oder gleich dieser ist.

12. Verfahren nach Anspruch 11, wobei der besagte Schritt d) das Berechnen der besagten Neuübertragungsperiode (PFP) wie folgt umfasst:

$$PFP = \frac{CR \cdot SD}{CR - RR},$$

wobei SD die besagte Unterbrechungsdauer (SD) darstellt, CR eine maximale Übertragungsrate ist, mit welcher die besagten ersten Pakete und die besagten zweiten Pakete an dem besagten Netzwerkknoten (RN) empfangen werden, und RR die besagte stromabwärts des besagten Netzwerkknotens (RN) verfügbare Bitrate (RR) ist.

13. Verfahren nach Anspruch 11 oder 12, wobei der besagte Schritt d) das derartige Einstellen der besagten Neuübertragungsperiode (PFP) umfasst, dass die besagte effektive Übertragungs-Bitrate höher als eine konstante Bitrate der besagten ersten Pakete oder gleich dieser ist.

14. Computerprogramm-Produkt, umfassend computerausführbare Befehle zum Durchführen, wenn das Programm auf einem Computer eines Netzwerkknotens (RN) für ein Kommunikationsnetzwerk (CN) läuft, eines Verfahrens zum Regeln von Verkehrsflüssen mit unterschiedlichen CoS in einem Kommunikationsnetzwerk (CN), wobei die besagten Verkehrsflüsse erste Pakete, die einer ersten CoS zugeordnet sind, und zweite Pakete, die einer zweiten CoS zugeordnet sind, umfassen, wobei die besagte erste CoS strengere QoS-Anforderungen aufweist als die besagte zweite CoS, wobei das besagte Verfahren umfasst:

- Wenn die besagten ersten Pakete und die besagten zweiten Pakete von einem weiteren Netzwerkknaten (TN) an dem besagten Netzwerkknoten (RN) empfangen werden, Speichern der besagten ersten Pakete in einer ersten Warteschlange ($Q^i1$), und Speichern der besagten zweiten Pakete in einer zweiten Warteschlange ($Q^i3$);
- Erkennen einer Überlast in der besagten zweiten Warteschlange ($Q^i3$);

wobei das besagte Computerprogramm-Produkt **dadurch gekennzeichnet ist, dass** das besagte Verfahren weiterhin umfasst:

- Erzeugen eines Pause-Rahmens (PF), welcher eine Unterbrechungsdauer (SD) spezifiziert, während welcher der besagte weitere Netzwerkknoten (TN) die Übertragung der besagten ersten Pakete und der besagten zweiten Pakete unterbrechen soll,

wobei der besagte Schritt des Erzeugens das Einstellen der besagten Unterbrechungsdauer (SD) auf einen Wert, der niedriger als eine für die besagten ersten Pakete maximal zulässige Verzögerungsvariation oder gleich dieser ist.

15. Digitales Datenspeichermedium, auf welchem ein Computerprogramm-Produkt gemäß Anspruch 14 gespeichert ist.

**Revendications**

1. Noeud de réseau (RN) pour un réseau de communication à commutation par paquets (CN) comprenant :

    - une première file d'attente ($Q^i_1$) et une deuxième file d'attente ($Q^i_3$) ;
    - un module d'entrée (IM) configuré pour recevoir à partir d'un autre noeud de réseau (TN) des premiers paquets associés à une première CoS et des deuxièmes paquets associés à une deuxième CoS, ladite première CoS présentant des exigences de qualité de service plus strictes que ladite deuxième CoS, et pour transférer lesdits premiers paquets vers ladite première file d'attente ($Q^i_1$) et lesdits deuxièmes paquets vers ladite deuxième file d'attente ($Q^i_3$) ; et
    - un gestionnaire de file d'attente (QM) configuré pour détecter un encombrement de ladite deuxième file d'attente ($Q^i_3$) ;

ledit noeud de réseau (RN) étant **caractérisé en ce qu'**il comprend en outre un module de transmission configuré pour transmettre audit autre noeud de réseau (TN) une trame de pause (PF) spécifiant une durée d'arrêt (SD) durant laquelle ledit autre noeud de réseau (TN) doit arrêter la transmission desdits premiers paquets et desdits deuxièmes paquets, dans lequel ladite durée d'arrêt (SD) est inférieure ou égale à une variation de retard admissible maximale sur lesdits premiers paquets.

2. Noeud de réseau (RN) selon la revendication 1, dans lequel ledit gestionnaire de file d'attente (QM) est configuré pour détecter ledit encombrement de ladite deuxième file d'attente ($Q^i_3$) en comparant un niveau de remplissage de ladite deuxième file d'attente ($Q^i_3$) à un seuil de remplissage ($T_3$).

3. Noeud de réseau (RN) selon la revendication 1 ou 2, dans lequel ledit module de transmission est en outre configuré pour retransmettre périodiquement ladite trame de pause (PF) avec une période de re-transmission (PFP).

4. Noeud de réseau (RN) selon la revendication 3, dans lequel ladite période de re-transmission (PFP) est telle qu'un débit binaire de transmission efficace, auquel lesdits premiers paquets et deuxièmes paquets sont reçus au niveau dudit noeud de réseau (RN), est inférieur ou égal à un débit binaire (RR) disponible en aval dudit noeud de réseau (RN).

5. Noeud de réseau (RN) selon la revendication 4, dans lequel ladite période de re-transmission (PFP) est calculée comme suit :

$$PFP = \frac{CR \cdot SD}{CR - RR},$$

où SD est ladite durée d'arrêt (SD), CR est un débit de transmission maximum auquel lesdits premiers paquets et deuxièmes paquets sont reçus au niveau dudit noeud de réseau (RN) et RR est ledit débit binaire (RR) disponible en aval dudit noeud de réseau (RN).

6. Noeud de réseau (RN) selon la revendication 4 ou 5, dans lequel ladite période de re-transmission (PFP) est telle que ledit débit binaire de transmission efficace est supérieur ou égal à un débit binaire constant desdits premiers paquets.

7. Réseau de communication à commutation par paquets (CN) comprenant un noeud de réseau (RN) selon l'une quelconque des revendications 1 à 6.

8. Procédé pour réguler les flux de trafic avec des CoS différentes dans un réseau de communication (CN), lesdits flux de trafic comprenant des premiers paquets associés à une première CoS et des deuxièmes paquets associés à une deuxième CoS, ladite première CoS présentant des exigences de qualité de service plus strictes que ladite deuxième CoS, ledit procédé comprenant, au niveau d'un noeud de réseau (RN), les étapes suivantes :

a) fournir une première file d'attente ($Q^i_1$) et une deuxième file d'attente ($Q^i_3$) ;
b) recevoir lesdits premiers paquets et lesdits deuxièmes paquets à partir d'un autre noeud de réseau (TN), stocker lesdits premiers paquets dans ladite première file d'attente ($Q^i_1$) et stocker lesdits deuxièmes paquets dans ladite deuxième file d'attente ($Q^i_3$) ;
c) détecter un encombrement de ladite deuxième file d'attente ($Q^i_3$) ;
ledit procédé étant **caractérisé en ce qu'**il comprend en outre, au niveau dudit noeud de réseau (RN), l'étape suivante
d) transmettre audit autre noeud de réseau (TN) une trame de pause (PF) spécifiant une durée d'arrêt (SD) durant laquelle ledit autre noeud de réseau (TN) doit arrêter la transmission desdits premiers paquets et desdits deuxièmes paquets,
dans lequel ladite étape d) comprend le réglage de ladite durée d'arrêt (SD) sur une valeur inférieure ou égale à une variation de retard admissible maximale sur lesdits premiers paquets.

9. Procédé selon la revendication 8, dans lequel ladite étape c) comprend la détection dudit encombrement de ladite deuxième file d'attente ($Q^i_3$) en comparant un niveau de remplissage de ladite deuxième file d'attente ($Q^i_3$) à un seuil de remplissage ($T_3$).

10. Procédé selon la revendication 8 ou 9, dans lequel ladite étape d) est répétée périodiquement avec une période de re-transmission (PFP).

11. Procédé selon la revendication 10, dans lequel ladite étape d) comprend le réglage de ladite période de re-transmission (PFP) de sorte qu'un débit binaire de transmission efficace, auquel lesdits premiers paquets et deuxièmes paquets sont reçus au niveau dudit noeud de réseau (RN), est inférieur ou égal à un débit binaire (RR) disponible en aval dudit noeud de réseau (RN).

12. Procédé selon la revendication 11, dans lequel ladite étape d) comprend le calcul de ladite période de re-transmission (PFP) comme suit :

$$PFP = \frac{CR \cdot SD}{CR - RR},$$

où SD est ladite durée d'arrêt (SD), CR est un débit de transmission maximum auquel lesdits premiers paquets et deuxièmes paquets sont reçus au niveau dudit noeud de réseau (RN) et RR est ledit débit binaire (RR) disponible en aval dudit noeud de réseau (RN).

13. Procédé selon la revendication 11 ou 12, dans lequel ladite étape d) comprend le réglage de ladite période de re-transmission (PFP) de sorte que ledit débit binaire de transmission efficace soit supérieur ou égal à un débit binaire constant desdits premiers paquets.

14. Produit de programme informatique comprenant des instructions exécutables par ordinateur pour exécuter, lorsque le programme est exécuté sur un ordinateur d'un noeud de réseau (RN) pour un réseau de communication (CN), un procédé pour réguler des flux de trafic avec des CoS différentes dans un réseau de communication (CN), lesdits flux de trafic comprenant des premiers paquets associés à une première CoS et des deuxièmes paquets associés à une deuxième CoS, ladite première CoS présentant des exigences de qualité de service plus strictes que ladite deuxième CoS, ledit procédé comprenant les étapes suivantes :

- lorsque lesdits premiers paquets et lesdits deuxièmes paquets sont reçus au niveau dudit noeud de réseau (RN) à partir d'un autre noeud de réseau (TN), stocker lesdits premiers paquets dans une première file d'attente ($Q^i_1$) et stocker lesdits deuxièmes paquets dans une deuxième file d'attente ($Q^i_3$) ;
- détecter un encombrement de ladite deuxième file d'attente ($Q^i_3$) ;

ledit produit de programme informatique étant **caractérisé en ce que** ledit procédé comprend en outre l'étape suivante

- générer une trame de pause (PF) spécifiant une durée d'arrêt (SD) durant laquelle ledit autre noeud de réseau (TN) doit arrêter la transmission desdits premiers paquets et desdits deuxièmes paquets,

dans lequel ladite étape de génération comprend le réglage de ladite durée d'arrêt (SD) sur une valeur inférieure ou égale à une variation de retard admissible maximale sur lesdits premiers paquets.

15. Support de stockage de données numériques stockant un produit de programme informatique selon la revendication 14.

**Figure 1a**

**Figure 1b**

20

TN sends EP

22

TN stops transmission of EP

23

TN sends EP

25

TN stops transmission of EP

26

TN sends EP

$t_0$

SD

SD

time

PFP

filling level of $Q_3^i \geq T_3$: RN sends PF

21

RN sends PF

24

## Figure 2

bits

200 Kb

A

B

RR=20 Mb/s

time

10 ms

SI

PFP

2 ms

## Figure 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009046869 A1
- US 7209440 B
- WO 2006124414 A